# EUROPÄISCHE PATENTSCHRIFT

(11) **EP 2 705 228 B1**
(45) Veröffentlichungstag und Bekanntmachung des Hinweises auf die Patenterteilung: **18.05.2016**
(21) Anmeldenummer: 12708021.6
(22) Anmeldetag: 09.03.2012
(51) Int. Cl.: F01N 3/20, F04B 17/04, F04B 53/00

(54) **ELEKTROMAGNETISCHE BETÄTIGUNGSEINRICHTUNGEN, INSBESONDERE ZUM BETREIBEN EINER PUMPE**
ELECTROMAGNETIC ACTUATORS, IN PARTICULAR FOR DRIVING A PUMP
ACTUATEURS ÉLECTROMAGNÉTIQUES, EN PARTICULIER POUR FAIRE FONCTIONNER UNE POMPE

(30) Priorität: 05.05.2011 DE 102011075303
(43) Veröffentlichungstag der Anmeldung: 12.03.2014
(73) Patentinhaber: Robert Bosch GmbH, 70442 Stuttgart (DE)
(72) Erfinder: WALETZEK, Christoph, 70327 Stuttgart (DE); HAEBERER, Rainer, 75015 Bretten (DE)
(86) Internationale Anmeldenummer: PCT/EP2012/054062
(87) Internationale Veröffentlichungsnummer: WO 2012/150065

(56) Entgegenhaltungen:
- EP-A1- 1 748 188
- DE-A1-102007 030 311
- DE-A1-102008 054 686

## Beschreibung

### Stand der Technik

Die Erfindung betrifft eine elektromagnetische Betätigungseinrichtung nach dem Oberbegriff des Anspruchs 1, sowie eine Membranpumpe nach dem nebengeordneten Patentanspruch.

Vom Markt her bekannt sind Abgasanlagen, beispielsweise von Kraftfahrzeugen, bei denen mittels eines Abgaskatalysators unter anderem Stickoxidverbindungen (NOx) reduziert werden. Eine Methode, die dabei zur Anwendung kommt, ist das sogenannte SCR-Verfahren ("selective catalytic reduction"), bei dem die Stickoxide in dem Abgas unter Zuhilfenahme von flüssigen Reduktionsmitteln zu Stickstoff (N2) und Wasser (H2O) reduziert werden. Das flüssige Reduktionsmittel wird in einem Tank gelagert und von einer Pumpe über eine Leitung von dem Tank zu einem so genannten Dosiermodul befördert. Häufig sind derartige Pumpen als Membranpumpen ausgeführt. Beispielsweise kann eine Membranpumpe über einen Elektromotor und einen Exzenter betätigt werden.

Eine Patentveröffentlichung aus diesem Fachgebiet ist beispielsweise die DE 10 2007 013 524 A1.

Aus der DE 10 2007 030 311 ist eine Membranpumpe mit einem elastischen Dämpfer bekannt.

### Offenbarung der Erfindung

Das der Erfindung zugrunde liegende Problem wird durch eine elektromagnetische Betätigungseinrichtung nach Anspruch 1 oder 3, sowie durch eine Membranpumpe nach dem nebengeordneten Anspruch gelöst. Vorteilhafte Weiterbildungen sind in den Unteransprüchen angegeben.

Die Erfindung geht von der Überlegung aus, dass eine elektromagnetische Betätigungseinrichtung, insbesondere zum Betreiben einer Pumpe zum Pumpen einer Flüssigkeit von einem Tank zu einer Abgasanlage, im Betrieb vergleichsweise starken Körperschall erzeugen kann. Beispielsweise betrifft dies die Abgasanlage einer Brennkraftmaschine, bei der ein flüssiges Reduktionsmittel zur Reduzierung von Stickoxiden (NOx) eingebracht werden soll. Erfindungsgemäß ist vorgesehen, dass im Bereich mindestens eines Elements der elektromagnetischen Betätigungseinrichtung Mittel zur Dämpfung von Körperschall vorgesehen sind. Sofern die elektromagnetische Betätigungseinrichtung benachbart zu dem das Reduktionsmittel enthaltenden Tank angeordnet ist, kann sich der Körperschall besonders stark fortpflanzen und auch als Luftschall in die Umgebung abstrahlen. Erfindungsgemäß sind die Mittel zur Dämpfung von Körperschall im Bereich eines Ankers und/oder eines mit dem Anker zusammenwirkenden Anschlags der Betätigungseinrichtung und/oder zwischen dem Anker und dem Anschlag angeordnet, wodurch vorteilhaft direkt am Ort der Entstehung des Körperschalls bereits eine signifikante Dämpfung des unerwünschten Körperschalls bewirkt werden kann.

Insbesondere wird der Körperschall durch ein Aufprallen des Ankers an dem Anschlag ausgelöst. Der Anschlag ist im Allgemeinen ein zu der elektromagnetischen Betätigungseinrichtung gehörender so genannter Polkern. Die Mittel zur Dämpfung des Körperschalls können erfindungsgemäß an oder zwischen verschiedenen Elementen der elektromagnetischen Betätigungseinrichtung angeordnet sein, welche in besonderem Maße für die Entstehung des Körperschalls verantwortlich sind.

Die Erfindung weist den Vorteil auf, dass Körperschall - und daraus folgend die Abstrahlung akustischer Wellen - beim Betrieb der elektromagnetischen Betätigungseinrichtung zum Pumpen einer Flüssigkeit von dem Tank zu der Abgasanlage deutlich reduziert werden kann. Die dafür erforderlichen Mittel beanspruchen keinen oder nur wenig zusätzlichen Bauraum und können kostengünstig hergestellt werden. Darüber hinaus kann die Erfindung vorteilhaft auch für sonstige Anwendungen einer elektromagnetischen Betätigungseinrichtung verwendet werden, um den jeweils entstehenden Körperschall zu dämpfen, beispielsweise für Magnetventile, Relais oder Schütze.

Nachfolgend werden die Mittel zur Dämpfung des Körperschalls genauer beschrieben. Es versteht sich, dass diese miteinander in nahezu beliebiger Weise kombiniert werden können.

Eine Ausgestaltung der Erfindung sieht vor, dass die Mittel zur Dämpfung von Körperschall eine zwischen dem Anker und dem Anschlag angeordnete Dämpfungseinrichtung zur Dämpfung von Körperschall aufweisen, wobei die Dämpfungseinrichtung vorzugsweise so angeordnet ist, dass der Anker den Anschlag in keinem Betriebszustand der Betätigungseinrichtung berührt. Dabei verhindert die Dämpfungseinrichtung, dass der Anker an dem Anschlag, also dem Polkern, direkt anschlagen kann. Üblicherweise besteht der Anker und/oder der Polkern aus Eisen beziehungsweise Stahl und ist vergleichsweise hart. Mittels der Dämpfungseinrichtung wird ermöglicht, den bei der Betätigung der elektromagnetischen Betätigungseinrichtung entstehenden Körperschall unmittelbar zu dämpfen bzw. erst gar nicht entstehen zu lassen.

Die Erfindung wirkt besonders gut, wenn der Anker und/oder der Anschlag und/oder die Dämpfungseinrichtung Öffnungen und/oder sacklochartige Ausnehmungen aufweist. Dadurch kann die wirksame Elastizität des jeweiligen Elements - auch wenn dieses aus einem vergleichsweise harten Material hergestellt ist - mittels der Öffnungen bzw. sacklochartigen Ausnehmungen erhöht werden. Durch die höhere Elastizität wirken der Anker beziehungsweise ein Anschlag des Ankers und/oder die Dämpfungseinrichtung und/oder der Anschlag am Polkern dämpfend, wodurch das "Aufprallgeräusch" vermindert wird. Zudem kann mittels der Öffnungen und/oder der sacklochartigen Ausnehmungen die Ausbildung von sich nicht konstruktiv überlagernden Interferenzen im Körper- bzw. Luftschall begünstigt werden, wodurch das Geräusch zusätzlich gedämpft wird. Weiterhin wird die Masse des Ankers reduziert, wodurch die Eigenfrequenz des Ankers vorteilhaft erhöht wird. Höherfrequenter Schall wird - aufgrund der geringeren Wahrnehmbarkeit - im Allgemeinen als weniger störend empfunden und kann gegebenenfalls durch schalldämpfende Maßnahmen stärker reduziert werden als niederfrequenter Schall. Beispielsweise weist der Anker axial ausgerichtete Bohrungen auf. Diese Bohrungen können durchgehend sein, oder sie können sacklochartig ausgeführt sein und stellen somit sacklochartige Ausnehmungen dar. Generell können die Öffnungen bzw. sacklochartigen Ausnehmungen nahezu beliebig angeordnet und/oder ausgeführt sein. Sie können regelmäßig oder regellos angeordnet sein und/oder können mit einem runden, rechteckförmigen oder sonstigem Querschnitt ausgeführt sein.

Die Erfindung sieht vor, dass der Anker und/oder der Anschlag und/oder die Dämpfungseinrichtung einen Schichtaufbau umfassend mindestens zwei, vorzugsweise voneinander verschiedener, Elemente, insbesondere Bleche aufweist. Durch die aufeinander geschichteten Bleche, welche beispielsweise zentrisch an einem Bolzen des Ankers fixiert sind, wird eine besonders gute Dämpfung des Körperschalls erreicht. Diese Bleche können verschiedene Dicken und entsprechend unterschiedliche Eigenfrequenzen aufweisen. Bei einem Aufprallen des Ankers an dem Anschlag werden die Bleche daher akustisch unterschiedlich angeregt. In der Summe können sich die unterschiedlich angeregten Bleche in ihrem Schwingvorgang gegenseitig behindern. Dadurch wird die Erzeugung beziehungsweise die Weitergabe von Körperschall vermindert. Außerdem können die Bleche aneinander reiben und somit Schallenergie in Wärme umsetzen. Dadurch wird eine zusätzliche Dämpfung erreicht und entsprechend ist der erzeugte Körperschall besonders klein.

Die Erfindung sieht ferner vor, dass zueinander benachbart angeordnete Elemente des Schichtaufbaus jeweils aus einem verschiedenartigen Material, insbesondere aus einem magnetischen oder nichtmagnetischen Material hergestellt sind. Damit werden zusätzliche Möglichkeiten geschaffen, den Aufbau der Bleche an dem Anker und/oder der Dämpfungseinrichtung und/oder dem Anschlag zu gestalten. Die aufeinander geschichteten Elemente können somit verschiedene Dicken aufweisen und/oder aus verschiedenartigen Materialien hergestellt sein, wobei magnetische Elemente mit nichtmagnetischen Elementen kombiniert werden können. Beispielsweise können die nichtmagnetischen Materialien Papier, Kunststoff oder Weichmetall sein. Mittels der beschriebenen Möglichkeiten kann einerseits eine genügende Funktion des Ankers, und andererseits eine genügende Dämpfung des Körperschalls erreicht werden.

Weiterhin wird vorgeschlagen, dass der Anker und/oder der Anschlag und/oder die Dämpfungseinrichtung mindestens teilweise aus einem elastischen Material, vorzugsweise mit einem Elastizitätsmodul von in etwa kleiner als 150 kN/mm², gebildet ist, insbesondere aus einem mikroperforierten Absorberblech. Alternativ oder ergänzend zu den oben beschriebenen Ausgestaltungen können der Anker und/oder der Anschlag und/oder die Dämpfungseinrichtung so ausgelegt sein, dass sie bereits wenig Körperschall beim Anschlagen des Ankers an dem Anschlag erzeugen. Besonders günstig ist es dabei, wenn der Elastizitätsmodul der jeweiligen Materialien in etwa kleiner als 150 kN/mm² (kilo-Newton pro Quadratmillimeter) beträgt. Das mikroperforierte Absorberblech, vom Markt her auch als "Flüsterblech" bekannt, ist für den erfindungsgemäßen Zweck besonders geeignet. Es weist - zumindest im Bereich einer Oberfläche - eine im Allgemeinen regelmäßige Feinstruktur auf, welche Löcher, Ausnehmungen, Einprägungen und/oder Ausprägungen umfassen kann. Ein Raster der Feinstruktur kann im Bereich von in etwa kleiner als 5 mm (Millimeter) oder auch kleiner als 1 mm betragen. Das Absorberblech kann den Körperschall zumindest teilweise in Reibungswärme umsetzen und so den entstehenden Körperschall besonders gut dämpfen. Andererseits kann durch die magnetischen Eigenschaften des Absorberblechs die Funktion der elektromagnetischen Betätigungseinrichtung unterstützt werden. Sofern der Anker vollständig aus dem mikroperforierten Absorberblech hergestellt ist, kann dieser durch ein Metallgerüst armiert sein, um die Dauerfestigkeit zu erhöhen.

Eine weitere Ausgestaltung der Erfindung sieht vor, dass eine Querschnittsfläche und/oder eine Anzahl der Öffnungen bzw. der sacklochartigen Ausnehmungen des Ankers und/oder des Anschlags und/oder der Dämpfungseinrichtung in radial äußerer Richtung größer ist als in radial weiter innen gelegenen Bereichen. Dadurch werden weitere konstruktive Möglichkeiten vorgeschlagen, um die Entstehung von Körperschall zu vermindern. Durch eine in radial äußerer Richtung größer werdende Querschnittsfläche und/oder Anzahl der Öffnungen beziehungsweise der sacklochartigen Ausnehmungen wird die Elastizität der jeweiligen Elemente in den Randbereichen effektiv größer. Zudem wird die Schall abstrahlende Fläche insgesamt vermindert. Dadurch kann die Entstehung von Körperschall besonders stark gedämpft werden, ohne dass spezielle Materialien verwendet werden müssen. Beispielsweise können die Öffnungen und/oder die sacklochartigen Ausnehmungen kreisrund - also als Bohrungen - ausgeführt sein, wobei ein jeweiliger Bohrungsradius und/oder die Anzahl der Bohrungen in radial äußerer Richtung entsprechend größer ist.

Eine weitere Ausgestaltung der Erfindung sieht vor, dass die Dämpfungseinrichtung und der Anschlag miteinander verbunden sind. Dadurch wird erreicht, dass die zwischen dem Anker und dem Anschlag angeordnete Dämpfungseinrichtung mit dem Anschlag - vorzugsweise starr - verbunden ist und den Betrieb der elektromagnetischen Betätigungseinrichtung nicht behindern kann. Dadurch kann vorteilhaft ein stets gleichmäßiges Schaltverhalten der elektromagnetischen Betätigungseinrichtung erreicht werden.

Die erfindungsgemäße elektromagnetische Betätigungseinrichtung baut einfacher, wenn der Anker und/oder der Anschlag und/oder die Dämpfungseinrichtung im Wesentlichen rotationsymmetrisch ausgeführt sind. Im Allgemeinen ist es vorteilhaft, wenn elektromagnetische Betätigungseinrichtungen rotationssymmetrisch ausgeführt sind. Entsprechend werden die erfindungsgemäßen Mittel zur Dämpfung von Körperschall ebenfalls rotationssymmetrisch ausgeführt. Es ist jedoch auch möglich, die Mittel im zur Verfügung stehenden Bauraum zumindest teilweise nicht rotationsymmetrisch auszuführen, um dadurch gegebenenfalls eine nochmals bessere Dämpfung des Körperschalls zu erreichen.

Die Erfindung ist besonders nützlich, wenn die elektromagnetische Betätigungseinrichtung als Hubmagnet ausgebildet ist. Dadurch wird eine besonders einfache und zugleich leistungsfähige Ausführungsform einer elektromagnetischen Betätigungseinrichtung beschrieben. Ein Hubmagnet ist zur Aufnahme der erfindungsgemäßen Mittel zur Dämpfung von Körperschall besonders geeignet. Dabei kann der Anker des Hubmagneten axial bewegbar (Zuganker) oder klappbar (Klappanker) ausgeführt sein.

Eine vorteilhafte Anwendung der Erfindung betrifft eine Membranpumpe zum Pumpen eines Reduktionsmittels von einem Tank in eine Abgasanlage einer Brennkraftmaschine, wobei die Membranpumpe mindestens eine erfindungsgemäße elektromagnetische Betätigungseinrichtung aufweist. Eine Membranpumpe ist ein besonders geeignetes Mittel zum Pumpen des Reduktionsmittels zur Verminderung von Stickoxid-Emissionen und kann vorteilhaft von einem Hubmagneten betrieben werden. Eine solche Membranpumpe ist beispielsweise starr mit Anschlussleitungen und/oder einem Tank und/oder einem sonstigen Element der Abgasanlage verbunden, so dass ein vergleichsweise großer Luftschall abgestrahlt wird. Die Erfindung ist besonders nützlich, weil sie dieses Geräusch deutlich vermindern kann.

Für die Erfindung wichtige Merkmale finden sich ferner in den nachfolgenden Zeichnungen, wobei die Merkmale sowohl in Alleinstellung als auch in unterschiedlichen Kombinationen für die Erfindung wichtig sein können, ohne dass hierauf nochmals explizit hingewiesen wird.

Nachfolgend werden beispielhafte Ausführungsformen der Erfindung unter Bezugnahme auf die Zeichnung erläutert. In der Zeichnung zeigen:
- Figur 1: ein vereinfachtes Schema einer Abgasanlage mit einer Dosiereinrichtung, einer Membranpumpe und einer elektromagnetischen Betätigungseinrichtung;
- Figur 2: eine Schnittdarstellung einer ersten Ausführungsform der elektromagnetischen Betätigungseinrichtung von Figur 1;
- Figur 3: eine Draufsicht auf die elektromagnetische Betätigungseinrichtung von Figur 2;
- Figur 4: eine Schnittansicht eines Ankers einer zweiten Ausführungsform der elektromagnetischen Betätigungseinrichtung;
- Figur 5: eine Schnittansicht eines Ankers einer dritten Ausführungsform der elektromagnetischen Betätigungseinrichtung; und
- Figur 6: eine Schnittansicht eines Ankers einer vierten Ausführungsform der elektromagnetischen Betätigungseinrichtung.

Es werden für funktionsäquivalente Elemente und Größen in allen Figuren auch bei unterschiedlichen Ausführungsformen die gleichen Bezugszeichen verwendet.

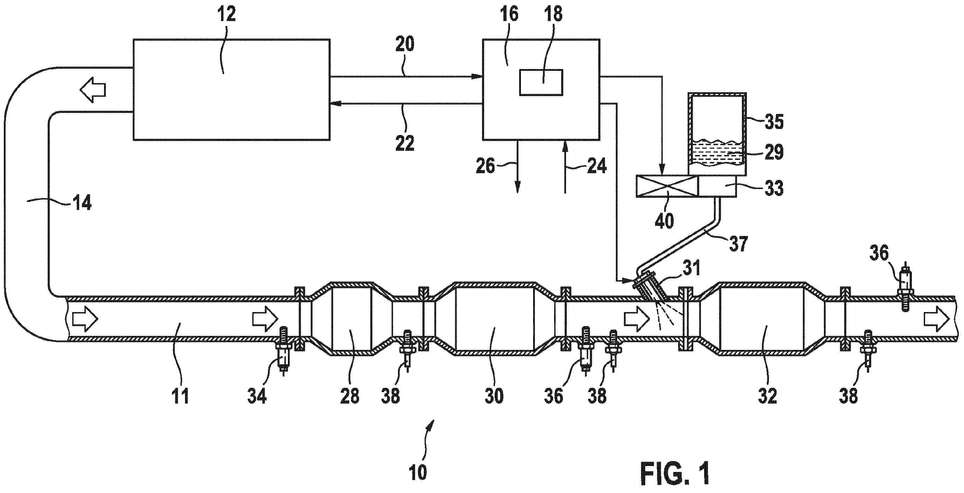

Figur 1 zeigt im unteren Bereich der Zeichnung ein vereinfachtes Schema einer Abgasanlage 10 eines - nicht dargestellten - Kraftfahrzeugs. Oberhalb der Abgasanlage 10 ist eine Brennkraftmaschine 12 symbolisch dargestellt, die über eine Rohrverbindung 14 Abgas in einen Abgaskanal 11 der Abgasanlage 10 fördert. Eine Steuer- und/oder Regeleinrichtung 16 mit einem darauf ablaufenden Computerprogramm 18, welches auf einem - nicht bezeichneten - Speicher abgespeichert ist, ist über ankommende und abgehende Steuerleitungen 20 und 22 mit der Brennkraftmaschine 12 sowie über ankommende und abgehende Steuerleitungen 24 und 26 mit Komponenten der Abgasanlage 10 verbunden. Die Verbindungen sind in der Zeichnung lediglich angedeutet.

In der Abgasanlage 10 wird das Abgas in der Zeichnung im Wesentlichen von links nach rechts durchgeleitet und aufbereitet. Vorliegend handelt es sich um die Abgasanlage 10 eines Dieselkraftfahrzeugs. Die Abgasanlage 10 weist in Flussrichtung des Abgases einen Diesel-Oxidationskatalysator 28, einen Dieselpartikelfilter 30, eine Dosiereinrichtung 31 zum Zuführen eines flüssigen Reduktionsmittels 29, und einen SCR-Katalysator 32 auf (SCR bedeutet "selective catalytic reduction"). Eine Membranpumpe 33, welche von einer elektromagnetischen Betätigungseinrichtung 40 betrieben wird, pumpt das Reduktionsmittel 29 aus einem Tank 35 über eine Fluidleitung 37 zu der Dosiereinrichtung 31. Die Membranpumpe 33 und die elektromagnetische Betätigungseinrichtung 40 sind vorliegend an dem Tank 35 angeordnet. Die elektromagnetische Betätigungseinrichtung 40 der Figur 1 ist als Hubmagnet ausgeführt.

Es versteht sich, dass die elektromagnetische Betätigungseinrichtung 40 und die Membranpumpe 33 auch anders angeordnet sein können, als es in der Zeichnung der Figur 1 dargestellt ist. Beispielsweise kann die elektromagnetische Betätigungseinrichtung 40 zusammen mit der Membranpumpe 33 unmittelbar an der Dosiereinrichtung 31 angeordnet sein. Dies ist in der Zeichnung der Figur 1 jedoch nicht dargestellt.

Stromaufwärts des Diesel-Oxidationskatalysators 28 ist eine Abgassonde 34 im Abgasstrom angeordnet. Die Abgassonde 34 ist vorliegend eine Lambdasonde. Stromaufwärts und stromabwärts des SCR-Katalysators 32 ist je ein NOx-Sensor 36 im Abgasstrom angeordnet. Des Weiteren weist die Abgasanlage 10 vorliegend drei Temperatursensoren 38 auf.

Die Abgassonde 34 erfasst im Betrieb der Brennkraftmaschine 12 die Sauerstoffkonzentration im Abgas. Die NOx-Sensoren 36 erfassen einen NOx-Anteil (Stickoxid-Anteil) im Abgas jeweils vor und hinter dem SCR-Katalysator 32. Bei Bedarf kann die Steuer- und/oder Regeleinrichtung 16 das flüssige Reduktionsmittel 29 in die Abgasanlage 10 einbringen. Dazu wird die elektromagnetische Betätigungseinrichtung 40 angesteuert, wodurch die Membranpumpe 33 betätigt wird und somit das Reduktionsmittel 29 über die Fluidleitung 37 zu der Dosiereinrichtung 31 gefördert wird.

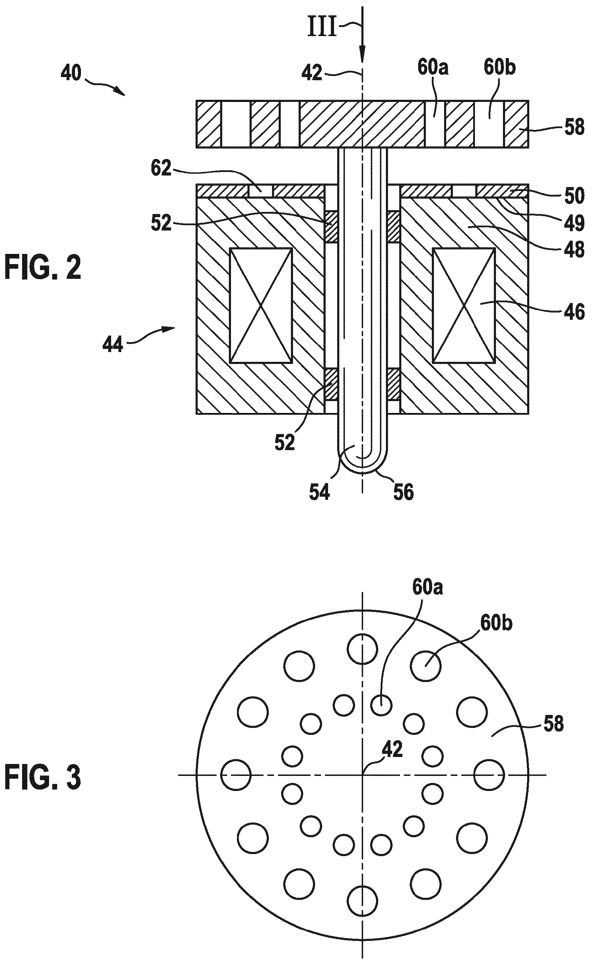

Figur 2 zeigt eine vereinfachte Schnittansicht der elektromagnetischen Betätigungseinrichtung 40. Die in der Figur 2 dargestellten Elemente sind im Wesentlichen rotationssymmetrisch zu einer Längsachse 42 ausgeführt. Im unteren Teil der Zeichnung von Figur 2 ist ein Elektromagnet 44 angeordnet welcher eine Spule 46 und einen Polkern 48 umfasst. Eine in der Zeichnung obere Stirnfläche des Polkerns 48 bildet einen Anschlag 49, an dem eine Dämpfungseinrichtung 50 angeordnet ist.

Der Elektromagnet 44 weist eine axial durchgehende zylindrische Öffnung (ohne Bezugszeichen) auf, in welcher zwei ringförmige Führungselemente 52 angeordnet sind. Die ringförmigen Führungselemente 52 führen einen zylindrischen Ankerbolzen 54 der in der Zeichnung vertikal in dem Elektromagneten 44 angeordnet ist. Der Ankerbolzen 54 weist eine axiale Länge auf, welche größer ist als eine axiale Länge des Elektromagneten 44. Ein in der Zeichnung unterer Endabschnitt 56 des Ankerbolzens 54 ist vorliegend in etwa kugelkappenförmig ausgeführt. An dem in der Zeichnung oberen Endabschnitt des Ankerbolzens 54 ist ein Anker 58 angeordnet. Vorliegend ist der Anker 58 von der Dämpfungseinrichtung 50 axial beabstandet. Die Dämpfungseinrichtung 50 ist somit zwischen dem Anker 58 und dem Anschlag 49 angeordnet. Vorzugsweise ist die Dämpfungseinrichtung 50 mit dem Polkern 48 bzw. mit dem Anschlag 49 starr verbunden.

Der Anker 58 weist mehrere radial innen liegende Öffnungen 60a und mehrere radial außen liegende Öffnungen 60b auf. Die Dämpfungseinrichtung 50 weist mehrere Öffnungen 62 auf. Die Öffnungen 60a, 60b und 62 sind vorliegend als Bohrungen ausgeführt. Der Anker 58 ist an dem Ankerbolzen 54 zentrisch befestigt. Diese Befestigung ist in der Figur 2 - und ebenso in den nachfolgenden Figuren 3 bis 6 - jedoch nicht mit dargestellt. Weitere - beispielsweise von dem Ankerbolzen 54 betätigte - Elemente oder Federn sind ebenfalls nicht dargestellt.

Vorliegend ist die in der Figur 2 dargestellte elektromagnetische Betätigungseinrichtung 40 beziehungsweise der dargestellte Elektromagnet 44 nicht bestromt. Somit ist der Anker 58 von dem Anschlag 49 beziehungsweise der Dämpfungseinrichtung 50 axial beabstandet. Bei einer Bestromung des Elektromagneten 44 wird der Anker 58 von dem Polkern 48 in der Zeichnung nach unten angezogen. Daraufhin bewegt sich der Anker 58 und der mit dem Anker 58 starr gekoppelte Ankerbolzen 54 in der Zeichnung der Figur 2 so weit nach unten, bis der Anker 58 an der Dämpfungseinrichtung 50 anschlägt. Bedingt durch die Öffnungen 60a, 60b und 62 des Ankers 58 und der Dämpfungseinrichtung 50 weisen der Anker 58 beziehungsweise die Dämpfungseinrichtung 50 ein vergleichsweise starkes elastisches Verhalten auf. Dadurch wird bei dem Anschlagen des Ankers 58 an die Dämpfungseinrichtung 50 beziehungsweise an den Anschlag 49 der entstehende Körperschall vorteilhaft gedämpft. Der derart gedämpfte Körperschall erzeugt ein entsprechend vermindertes Geräusch.

Figur 3 zeigt eine Draufsicht auf die elektromagnetische Betätigungseinrichtung 40 der Figur 2 entsprechend einer Ansicht III. Man erkennt, dass die Querschnittsfläche der Öffnungen des Ankers 58 in radial äußerer Richtung größer wird bzw. ist. In der Zeichnung der Figur 3 weisen die radial äußeren Öffnungen 60b eine in etwa doppelte Querschnittsfläche auf wie die radial inneren Öffnungen 60a. Es versteht sich, dass die in der Figur 3 gezeigte Anordnung und Größe der Öffnungen 60a, 60b und 62 auch beliebig anders sein kann. Ebenso können die Geometrien von der Kreisform abweichen.

In einer nicht gezeigten weiteren Ausführungsform des Ankers 58 weisen die Öffnungen 60a und 60b eine gleiche Querschnittsfläche auf, wobei jedoch die Anzahl der radial äußeren Öffnungen 60b größer als die Anzahl der radial inneren Öffnungen 60a ist. Damit kann erreicht werden, dass die Summe der Querschnittsflächen der radial äußeren Öffnungen 60b entsprechend größer ist.

Auf die erstgenannte oder die zweitgenannte Weise kann erreicht werden, dass der Anker 58 in den radial äußeren Bereichen eine - im Vergleich zu einer Ausführungsform des Ankers 58 ohne die Öffnungen 60a und 60b - höhere wirksame Elastizität aufweist. Ebenso ist eine mittlere Masse des Ankers 58 in den radial äußeren Bereichen reduziert. Auf diese Weise wird erreicht, dass der Anker 58 beim Anschlagen an die Dämpfungseinrichtung 50 beziehungsweise dem Anschlag 49 vorteilhaft weniger Körperschall erzeugt.

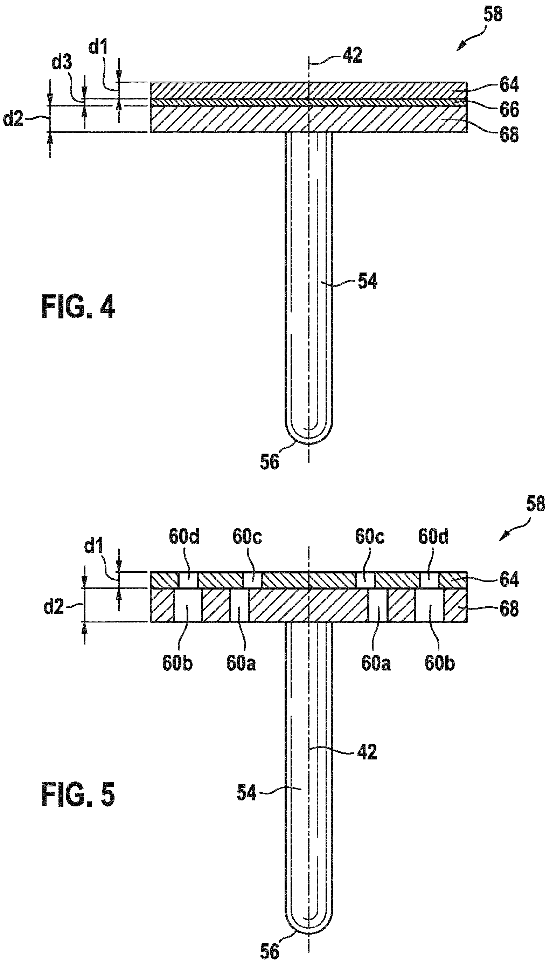

Figur 4 zeigt eine weitere Ausführungsform des Ankers 58. Vorliegend weist der Anker 58 drei aufeinander geschichtete Elemente 64, 66 und 68 auf. Eine Dicke d1 des Elements 64 ist vorliegend kleiner als eine Dicke d2 des Elements 68. Eine Dicke d3 des mittleren Elements 66 ist vorliegend kleiner als die Dicke d1. Insgesamt sind die Elemente 64, 66 und 68 vergleichsweise dünn und weisen somit in etwa die Eigenschaft von Blechen auf. Vorliegend sind die Elemente 64 und 68 aus einem magnetischen Material hergestellt und das Element 66 ist aus einem nichtmagnetischen Material hergestellt, insbesondere aus einem Papier oder Kunststoff.

Bei einem Anschlagen des Ankers 58 an dem (in der Figur 4 nicht dargestellten) Anschlag 49 werden die Elemente 64 und 68 mit zueinander unterschiedlichen Eigenfrequenzen angeregt. Dabei können sie sich gegenseitig am Schwingen behindern, wodurch das Aufprallgeräusch minimiert wird. Ergänzend dazu weist das Element 66 einen besonders niedrigen Elastizitätsmodul mit weniger als 150 kN/mm² (kilo-Newton pro Quadratmillimeter) auf und wirkt dämpfend. Beide beschriebenen Mittel zur Dämpfung von Körperschall ergänzen sich, wodurch ein besonders niedriges Geräusch erzeugt wird.

Figur 5 zeigt eine weitere Ausführungsform des Ankers 58, welche eine Kombination der in den Figuren 2, 3 und 4 gezeigten Mittel darstellt. Vorliegend weist der Anker 58 zwei aufeinander geschichtete Elemente 64 und 68 auf. Das Element 68 ist aus einem magnetischen Material hergestellt und weist ähnlich zu der Ausführung des Ankers 58 nach der Figur 2 radial innere Öffnungen 60a und radial äußere Öffnungen 60b auf. Das in der Zeichnung der Figur 5 oberhalb von dem Element 68 angeordnete Element 64 ist ebenfalls aus einem magnetischen Material hergestellt und weist in zwei Radien Öffnungen 60c auf. Die Öffnungen 60c haben einen zueinander gleichen Radius (ohne Bezugszeichen). Jedoch ist die Anzahl der Öffnungen 60c in dem radial äußeren Kreis größer als die Anzahl der Öffnungen 60c in dem radial inneren Kreis.

Beim Anschlagen des Ankers 58 an dem in der Figur 5 nicht dargestellten Anschlag 49 wird durch die vergleichsweise hohe wirksame Elastizität der Elemente 64 und 68 (mittels der Öffnungen 60a bis 60d) die Anregung von Körperschall vermindert. Ergänzend werden die Elemente 64 und 68 in Folge der unterschiedlichen Dicken d1 und d2 mit entsprechend unterschiedlichen Frequenzen angeregt. Dadurch behindern sich die in der Schwingung befindlichen Elemente 64 und 68. Die Schwingungsenergie wird dadurch zumindest teilweise mittels Reibung in Wärme umgesetzt, und es wird entsprechend weniger Körperschall erzeugt.

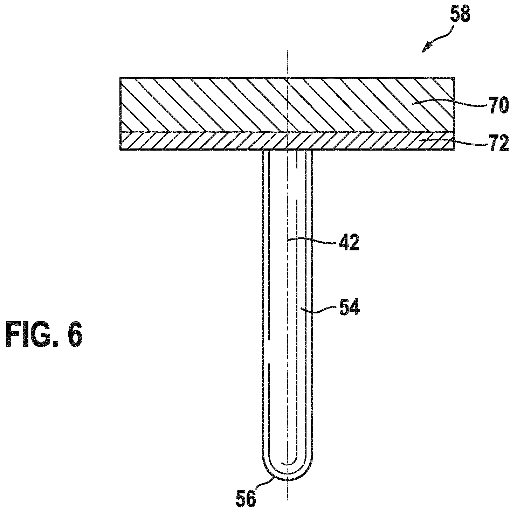

Figur 6 zeigt eine nochmals weitere Ausführungsform des Ankers 58 der elektromagnetischen Betätigungseinrichtung 40. Ein Element 70 ist aus einem magnetischen Material hergestellt und weist vorliegend keine Öffnungen und/oder Aussparungen auf. In der Zeichnung unterhalb des Elements 70 ist ein Element 72 angeordnet, welches vorliegend als ein mikroperforiertes Absorberblech ausgeführt ist. Beide Elemente 70 und 72 sind zentrisch an dem Ankerbolzen 54 angeordnet; die dazu erforderlichen Befestigungsmittel sind in der Figur 6 jedoch nicht gezeigt. Vorliegend ist das Element 72 ebenfalls aus einem magnetischen Material hergestellt.

Bei einer Bestromung der elektromagnetischen Betätigungseinrichtung 40 schlägt der Anker 58 mit dem Element 72 an den (in der Figur 6 nicht gezeigten) Anschlag 49 an. Infolge der besonders hohen Elastizität des mikroperforierten Absorberblechs, welches also einen besonders niedrigen Elastizitätsmodul aufweist, wird das Anschlagen des Ankers 58 an dem Anschlag 49 besonders stark gedämpft. Dies erfolgt in einer Endphase der Bewegung des Ankers 58, und kann somit die Dynamik der Ankerbewegung im Wesentlichen nicht verschlechtern.

Es versteht sich, dass auch die in der Figur 6 gezeigten Mittel zur Dämpfung von Körperschall mit den in den Figuren 2 bis 5 gezeigten Mitteln nahezu beliebig kombiniert werden können.

## Patentansprüche

1. Elektromagnetische Betätigungseinrichtung (40), insbesondere zum Betreiben einer Pumpe (33) zum Pumpen einer Flüssigkeit (29) von einem Tank (35) zu einer Abgasanlage (10), wobei im Bereich mindestens eines Elements (48, 58) der elektromagnetischen Betätigungseinrichtung (40) Mittel zur Dämpfung von Körperschall vorgesehen sind, wobei die Mittel im Bereich eines Ankers (58) und/oder eines mit dem Anker (58) zusammenwirkenden Anschlags (49) der Betätigungseinrichtung (40) und/oder zwischen dem Anker (58) und dem Anschlag (49) angeordnet sind, wobei der Anker (58) und/oder der Anschlag (49) einen Schichtaufbau umfassend mindestens zwei, vorzugsweise voneinander verschiedener, Elemente (64, 66, 68), insbesondere Bleche, aufweist, **dadurch gekennzeichnet, daß** zueinander benachbart angeordnete Elemente (64, 66, 68) des Schichtaufbaus jeweils aus einem verschiedenartigen Material, insbesondere aus einem magnetischen oder nichtmagnetischen Material, hergestellt sind.

2. Elektromagnetische Betätigungseinrichtung (40) nach Anspruch 1, **dadurch gekennzeichnet, dass** die Mittel zur Dämpfung von Körperschall eine zwischen dem Anker (58) und dem Anschlag (49) angeordnete Dämpfungseinrichtung (50) zur Dämpfung von Körperschall aufweisen, wobei die Dämpfungseinrichtung (50) vorzugsweise so angeordnet ist, dass der Anker (58) den Anschlag (49) in keinem Betriebszustand der Betätigungseinrichtung (40) berührt.

3. Elektromagnetische Betätigungseinrichtung (40), insbesondere zum Betreiben einer Pumpe (33) zum Pumpen einer Flüssigkeit (29) von einem Tank (35) zu einer Abgasanlage (10), wobei im Bereich mindestens eines Elements (48, 58) der elektromagnetischen Betätigungseinrichtung (40) Mittel zur Dämpfung von Körperschall vorgesehen sind, wobei die Mittel im Bereich eines Ankers (58) und/oder eines mit dem Anker (58) zusammenwirkenden Anschlags (49) der Betätigungseinrichtung (40) und/oder zwischen dem Anker (58) und dem Anschlag (49) angeordnet sind, wobei die Mittel zur Dämpfung von Körperschall eine zwischen dem Anker (58) und dem Anschlag (49) angeordnete Dämpfungseinrichtung (50) zur Dämpfung von Körperschall aufweisen, wobei die Dämpfungseinrichtung (50) vorzugsweise so angeordnet ist, dass der Anker (58) den Anschlag (49) in keinem Betriebszustand der Betätigungseinrichtung (40) berührt, wobei die Dämpfungseinrichtung (50) einen Schichtaufbau umfassend mindestens zwei, vorzugsweise voneinander verschiedener, Elemente (64, 66, 68), insbesondere Bleche, aufweist, **dadurch gekennzeichnet, daß** zueinander benachbart angeordnete Elemente (64, 66, 68) des Schichtaufbaus jeweils aus einem verschiedenartigen Material, insbesondere aus einem magnetischen oder nichtmagnetischen Material, hergestellt sind.

4. Elektromagnetische Betätigungseinrichtung (40) nach wenigstens einem der vorhergehenden Ansprüche, **dadurch gekennzeichnet, dass** der Anker (58) und/oder der Anschlag (49) und/oder die Dämpfungseinrichtung (50) Öffnungen (60a, 60b, 62) und/oder sacklochartige Ausnehmungen aufweist.

5. Elektromagnetische Betätigungseinrichtung (40) nach wenigstens einem der vorhergehenden Ansprüche, **dadurch gekennzeichnet, dass** der Anker (58) und/oder der Anschlag (49) und/oder die Dämpfungseinrichtung (50) mindestens teilweise aus einem elastischen Material, vorzugsweise mit einem Elastizitätsmodul von in etwa kleiner als 150 kN/mm², gebildet ist, insbesondere aus einem mikroperforierten Absorberblech.

6. Elektromagnetische Betätigungseinrichtung (40) nach Anspruch 4, **dadurch gekennzeichnet, dass** eine Querschnittsfläche und/oder eine Anzahl der Öffnungen (60a, 60b, 62) bzw. der sacklochartigen Ausnehmungen des Ankers (58) und/oder des Anschlags (49) und/oder der Dämpfungseinrichtung (50) in radial äußerer Richtung größer ist.

7. Elektromagnetische Betätigungseinrichtung (40) nach wenigstens einem der Ansprüche 2 bis 6, **dadurch gekennzeichnet, dass** die Dämpfungseinrichtung (50) und der Anschlag (49) miteinander verbunden sind.

8. Elektromagnetische Betätigungseinrichtung (40) nach wenigstens einem der vorhergehenden Ansprüche, **dadurch gekennzeichnet, dass** der Anker (58) und/oder der Anschlag (49) und/oder die Dämpfungseinrichtung (50) im Wesentlichen rotationsymmetrisch ausgeführt sind.

9. Elektromagnetische Betätigungseinrichtung (40) nach wenigstens einem der vorhergehenden Ansprüche, **dadurch gekennzeichnet, dass** sie als Hubmagnet ausgebildet ist.

10. Membranpumpe (33), zum Pumpen eines Reduktionsmittels (29) von einem Tank (35) in eine Abgasanlage (10) einer Brennkraftmaschine, **dadurch gekennzeichnet, dass** sie mindestens eine elektromagnetische Betätigungseinrichtung (40) nach einem der vorhergehenden Ansprüche aufweist.

## Claims

1. Electromagnetic actuator (40), in particular for operating a pump (33) for pumping a fluid (29) from a tank (35) to an exhaust system (10), wherein means for damping solid-borne sound are provided in the region of at least one element (48, 58) of the electromagnetic actuator (40), wherein the means are arranged in the region of an armature (58) and/or of a stop (49), interacting with the armature (58), of the actuator (40) and/or between the armature (58) and the stop (49), wherein the armature (58) and/or the stop (49) have/has a layered structure comprising at least two elements (64, 66, 68), in particular pieces of sheet metal, which are preferably different from one another, **characterized in that** elements (64, 66, 68) of the layered structure which are arranged adjacent to one another are each manufactured from a different type of material, in particular from a magnetic or non-magnetic material.

2. Electromagnetic actuator (40) according to Claim 1, **characterized in that** the means for damping solid-borne sound have a damping device (50) which is arranged between the armature (58) and the stop (49) and has the purpose of damping solid-borne sound, wherein the damping device (50) is preferably arranged in such a way that the armature (58) is not in contact with the stop (49) in any operating state of the actuator (40).

3. Electromagnetic actuator (40), in particular for operating a pump (33) for pumping a fluid (29) from a tank (35) to an exhaust system (10), wherein means for damping solid-borne sound are provided in the region of at least one element (48, 58) of the electromagnetic actuator (40), wherein the means are arranged in the region of an armature (58) and/or of a stop (49), interacting with the armature (58), of the actuator (40) and/or between the armature (58) and the stop (49), wherein the means for damping solid-borne sound have a damping device (50) which is arranged between the armature (58) and the stop (49) and has the purpose of damping solid-borne sound, wherein the damping device (50) is preferably arranged in such a way that the armature (58) is not in contact with the stop (49) in any operating state of the actuator (40), wherein the damping device (50) has a layered structure comprising at least two elements (64, 66, 68), in particular pieces of sheet metal, which are preferably different from one another, **characterized in that** elements (64, 66, 68) of the layered structure which are arranged adjacent to one another are each manufactured from a different type of material, in particular from a magnetic or non-magnetic material.

4. Electromagnetic actuator (40) according to at least one of the preceding claims, **characterized in that** the armature (58) and/or the stop (49) and/or the damping device (50) have/has openings (60a, 60b, 62) and/or blind-hole-like recesses.

5. Electromagnetic actuator (40) according to at least one of the preceding claims, **characterized in that** the armature (58) and/or the stop (49) and/or the damping device (50) are/is formed at least partially from an elastic material, preferably with a modulus of elasticity of approximately less than 150 kN/mm², in particular from a micro-perforated absorber plate.

6. Electromagnetic actuator (40) according to Claim 4, **characterized in that** a cross-sectional area and/or a number of openings (60a, 60b, 62) or of the blind-hole-like recesses in the armature (58) and/or the stop (49) and/or the damping device (50) are/is larger in the radially outer direction.

7. Electromagnetic actuator (40) according to at least one of Claims 2 to 6, **characterized in that** the damping device (50) and the stop (49) are connected to one another.

8. Electromagnetic actuator (40) according to at least one of the preceding claims, **characterized in that** the armature (58) and/or the stop (49) and/or the damping device (50) are embodied in an essentially rotationally symmetrical fashion.

9. Electromagnetic actuator (40) according to at least one of the preceding claims, **characterized in that** it is embodied as a lifting magnet.

10. Diaphragm pump (33) for pumping a reducing agent (29) from a tank (35) into an exhaust system (10) of an internal combustion engine, **characterized in that** it has at least one electromagnetic actuator (40) according to one of the preceding claims.

## Revendications

1. Actionneur électromagnétique (40), notamment pour faire fonctionner une pompe (33) en vue de pomper un liquide (29) d'un réservoir (35) vers une installation de gaz d'échappement (10), des moyens d'atténuation du bruit du corps étant prévus dans la région d'au moins un élément (48, 58) de l'actionneur électromagnétique (40), les moyens étant disposés dans la région d'une ancre (58) et/ou d'une butée (49), interagissant avec l'ancre (58), de l'actionneur (40) et/ou entre l'ancre (58) et la butée (49), l'ancre (58) et/ou la butée (49) comportant une structure comprenant au moins deux éléments (64, 66, 68), de préférence, différents les uns des autres, notamment des tôles, **caractérisé en ce que** les éléments (64, 66, 68), disposés à proximité les uns des autres, de la structure sont respectivement fabriqués à partir d'un matériau de type différent, notamment d'un matériau magnétique ou non magnétique.

2. Actionneur électromagnétique (40) selon la revendication 1, **caractérisé en ce que** les moyens d'atténuation du bruit du corps comportent un dispositif d'atténuation (50) disposé entre l'ancre (58) et la butée (49) pour atténuer le bruit du corps, le dispositif d'atténuation (50) étant de préférence disposé de telle sorte que l'ancre (58) ne touche la butée (49) dans aucun état de fonctionnement de l'actionneur (40).

3. Actionneur électromagnétique (40), notamment pour faire fonctionner une pompe (33) en vue de pomper un liquide (29) d'un réservoir (35) vers une installation de gaz d'échappement (10), des moyens d'atténuation du bruit du corps étant prévus dans la région d'au moins un élément (48, 58) de l'actionneur électromagnétique (40), les moyens étant disposés dans la région d'une ancre (58) et/ou d'une butée (49), interagissant avec l'ancre (58), de l'actionneur (40) et/ou entre l'ancre (58) et la butée (49), les moyens d'atténuation du bruit du corps comportant un dispositif d'atténuation (50) disposé entre l'ancre (58) et la butée (49) pour atténuer le bruit du corps, le dispositif d'atténuation (50) étant de préférence disposé de telle sorte que l'ancre (58) ne touche la butée (49) dans aucun état de fonctionnement de l'actionneur (40), le dispositif d'atténuation (50) comportant une structure comprenant au moins deux éléments (64, 66, 68) différents les uns des autres, notamment des tôles, **caractérisé en ce que** les éléments (64, 66, 68), disposés les uns à côté des autres, de la structure sont respectivement fabriqués à partir d'un matériau de type différent, notamment d'un matériau magnétique ou non magnétique.

4. Actionneur électromagnétique (40) selon au moins l'une quelconque des revendications précédentes, **caractérisé en ce que** l'ancre (58) et/ou la butée (49) et/ou le dispositif d'atténuation (50) comportent des ouvertures (60a, 60b, 62) et/ou des évidements de type trou borgne.

5. Actionneur électromagnétique (40) selon au moins l'une quelconque des revendications précédentes, **caractérisé en ce que** l'ancre (58) et/ou la butée (49) et/ou le dispositif d'atténuation (50) sont formés au moins en partie d'un matériau élastique, de préférence avec un module d'élasticité approximativement inférieur à 150 kN/mm², notamment à partir d'une tôle absorbante microperforée.

6. Actionneur électromagnétique (40) selon la revendication 4, **caractérisé en ce qu'**une surface de section transversale et/ou un nombre d'ouvertures (60a, 60b, 62) et/ou d'évidements de type trou borgne de l'ancre (58) et/ou de la butée (49) et/ou du dispositif d'atténuation (50) est supérieur dans la direction dans extérieure le plan radial.

7. Actionneur électromagnétique (40) selon au moins l'une quelconque des revendications 2 à 6, **caractérisé en ce que** le dispositif d'atténuation (50) et la butée (49) sont reliés entre eux.

8. Actionneur électromagnétique (40) selon au moins l'une quelconque des revendications précédentes, **caractérisé en ce que** l'ancre (58) et/ou la butée (49) et/ou le dispositif d'atténuation (50) sont réalisés pour l'essentiel de façon symétrique en rotation.

9. Actionneur électromagnétique (40) selon au moins l'une quelconque des revendications précédentes, **caractérisé en ce qu'**il prend la forme d'un aimant de levage.

10. Pompe à membrane (33), servant à pomper un agent de réduction (29) d'un réservoir (35) dans une installation de gaz d'échappement (10) d'un moteur à combustion interne, **caractérisée en ce qu'**elle comporte au moins un actionneur électromagnétique (40) selon l'une quelconque des revendications précédentes.
